# EUROPÄISCHE PATENTANMELDUNG

(11) **EP 1 892 770 A1**
(43) Veröffentlichungstag der Anmeldung: **27.02.2008**
(21) Anmeldenummer: 06017735.9
(22) Anmeldetag: 25.08.2006
(51) Int. Cl.: H01L 31/042, F16B 41/00, F16B 31/02, E04D 3/36, F24J 2/52

(54) **Solaranlage und Befestigungsmittel zur Verwendung in einer Solaranlage**

(71) Anmelder: Art & Form Verwaltungsgesellschaft mbH, 97076 Würzburg (DE)
(72) Erfinder: Petsch, Thomas, D-97082 Würzburg (DE)
(74) Vertreter: von den Steinen, Axel

(57) **Zusammenfassung**

Die Erfindung betrifft eine Solaranlage (01) mit zumindest einem Solarmodul (02), mit dem Sonncnenergie aufgefangen werden kann, wobei zumindest zwei Teile (02, 03, 04) der Solaranlage (01) mit einem Befestigungsmittel (05) aneinander befestigt und/oder gesichert sind, und wobei das Befestigungsmittel (05) einen Befestigungsteil aufweist, der die beiden Teile der Solaranlage miteinander verbindet, und wobei das Befestigungsmittel (05) einen Werlczeugeingriffsteil aufweist, an dem ein Montagewerkzeug kraftübertragend zum Eingriff bringbar ist. Zwischen dem Befestigungsteil und dem Werkzeugeingriffsteil ist dabei eine Sollbruchstelle (09) vorgesehen, wobei die Sollbruchstelle (09) bei Überschreiten einer Grenzlast aufbricht und der Werlczeugeingriffstcil vom Befestigungsteil getrennt wird.

## Beschreibung

Die Erfindung betrifft eine Solaranlage mit zumindest einem Solarmodul nach dem Oberbegriff des Anspruchs 1.

Weiter betrifft die Erfindung ein Befestigungsmittel zur Verwendung in Solaranlagen.

Gattungsgemäße Solaranlagen sind mit zumindest einem Solarmodul, insbesondere Photovoltaikmodulen, ausgestattet, um Sonnenenergie aufzufangen. Üblicherweise werden diese Solaranlagen aus einer Vielzahl von Bauteilen zusammengesetzt und mit Befestigungsmitteln aneinander fixiert bzw. gesichert. Zur Montage der Befestigungsmittel wird üblicherweise Montagewerkzeug, beispielsweise Mehrkantschraubendreher, eingesetzt, um die für die Montage der Befestigungsmittel erforderlichen Kräfte zu übertragen.

Aufgrund der sich stark ausweitenden Nutzung der Solarenergie finden gattungsgemäße Solaranlagen immer größere Verbreitung und werden vielfach auch in abgelegenen Gegenden installiert. Eine Überwachung der entsprechenden Solaranlagen durch permanent anwesendes Fachpersonal ist dabei vielfach nicht möglich. Da die Solaranlagen und insbesondere die darin installierten Solarmodule einen erheblichen Vermögenswert darstellen, kommt es immer häufiger zu Diebstählen, bei denen Teile der Solaranlage, insbesondere die Solarmodule, gestohlen werden.

Es ist deshalb Aufgabe der vorliegenden Erfindung, eine neue Solaranlage vorzuschlagen, die mit einfachen Mitteln wirksam gegen Diebstahl gesichert werden kann. Weiter ist es Aufgabe der vorliegenden Erfindung, ein die Diebstahlsicherheit von Solaranlagen erhöhendes Befestigungsmittel vorzuschlagen.

Diese Aufgabe wird durch eine Solaranlage beziehungsweise das Befestigungsmittel nach der Lehre der beiden unabhängigen Hauptansprüche gelöst.

Vorteilhafte Ausführungsformen der Erfindung sind Gegenstand der Unteransprüche.

Die erfindungsgemäße Erhöhung der Diebstahlsicherheit von Solaranlagen beruht auf dem Grundgedanken, dass zwischen Befestigungsteil und Werkzeugeingriffsteil des Befestigungsmittels eine Sollbruchstelle vorgesehen ist. Sobald das Befestigungsmittel an der entsprechend vorgesehenen Befestigungsstelle der Solaranlage montiert ist, kann der Monteur durch entsprechende Aufbringung einer vorgegebenen grenzlastüberschreitenden Montagekraft dafür sorgen, dass die Sollbruchstelle aufbricht, wodurch das Werkzeugeingriffsteil vom Befestigungsteil getrennt wird. Im Ergebnis ist die Solaranlagc damit wirksam vor Diebstahlhandlungen geschützt, da das Befestigungsmittel nicht mehr durch Einsatz des Montagewerkzeuges demontiert werden kann. Eine Demontage der Befestigungsmittel ist vielmehr weitgehend ausgeschlossen beziehungsweise erheblich erschwert, da die regulären Montagewerkzeuge nicht mehr eingesetzt werden können, sondern vielmehr massive Demontagewerkzeuge, beispielsweise Winkelschleifer, zur Entfernung der Befestigungsmittel notwendig sind.

Welche Art von Solarmodulen an der Solaranlage vorgesehen sind und durch die erfindungsgemäßen Befestigungsmittel vor Diebstahl gesichert werden, ist grundsätzlich beliebig. Besonders hohe Bedeutung hat der erfindungsgemäße Diebstahlschutz bei Photovoltaikmodulen, da diese aufgrund der hohen Herstellungskosten einen erheblichen Vermögenswert darstellen.

Auch die konstruktive Ausbildung des Befestigungsmittels selber ist grundsätzlich beliebig. Nach einer bevorzugten Ausführungsform ist das Befestigungsmittel in der Art einer Befestigungsschraube ausgebildet.

Um die erfindungsgemäß vorgesehene Sollbruchstelle an der Befestigungsschraube zu realisieren, ist es besonders vorteilhaft, wenn der Schraubenkopf der Befestigungsschraube eine Einkerbung aufweist. Der eingekerbte Materialquerschnitt, der letztlich eine Materialschwächung darstellt, bildet auf diese Weise die gewünschte Sollbruchstelle, so dass ein Teil des Schraubenkopfes zum Werkzeugeingriffsteil und ein anderer Teil des Schraubenkopfes zum Befestigungsteil der Befestigungsschraube gehört. Diese beiden Teile des Schraubenkopfes sind einstückig miteinander verbunden und können durch Überschreiten der Grenzlast voneinander getrennt werden.

Um die Demontage der Befestigungsschraube nach Entfernen des Werkzeugeingriffsteils weitgehend unmöglich zu machen, ist es besonders vorteilhaft, wenn der zum Befestigungsteil gehörige Teil des Schraubenkopfes einen nach außen verjüngenden, insbesondere spitz zulaufenden Materialquerschnitt aufweist. An diesem sich verjüngenden Materialquerschnitt können andere Montagewerkzeuge, beispielsweise Zangen, nur sehr ungünstig in Eingriff gebracht werden, so dass nur sehr geringe Demontagekräfte aufgebracht werden können.

Die konstruktive Ausbildung des Werkzeugeingriffsteils am Schraubenkopf ist grundsätzlich beliebig. Nach einer bevorzugten Ausführungsform ist am Schraubenkopf ein Innensechskant vorgesehen.

An welcher Stelle der Solaranlage die zur Diebstahlsicherung vorgesehenen Befestigungsmittel eingesetzt werden, ist grundsätzlich beliebig. Nach einer ersten.Ausführungsform dienen die Befestigungsmittel zur Befestigung beziehungsweise Sicherung der Solarmodule an einem Gestell.

Nach einer alternativen beziehungsweise auch additiv vorzusehenden Ausführungsform sind die Befestigungsmittel am Gestell zur Lagerung der Solarmodule vorgesehen und dienen der Befestigung des Gestells an einem Fundament.

Eine Ausführungsform der Erfindung ist in den Zeichnungen schematisch dargestellt und wird nachfolgend beispielhaft erläutert.

Es zeigen:
- **Fig. 1**: einen Teil einer Solaranlage mit erfindungsgemäßem Befestigungsmittel im Querschnitt;
- **Fig. 2**: das Befestigungsmittel gemäß **Fig. 1** nach Entfernung des Werkzeugeingriffsteils.

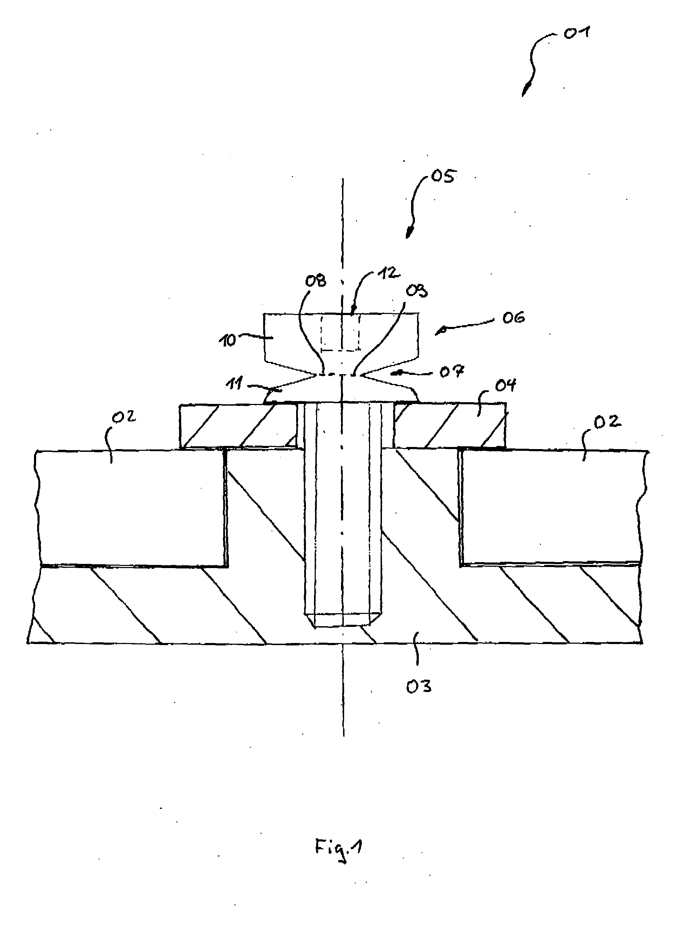

In **Fig. 1** ist ein Ausschnitt aus einer Solaranlage 01 mit zwei schematisch angedeuteten Solarmodulen 02 dargestellt. Die Solarmodule 02 können bevorzugt in der Art von Photovoltaikmodulen ausgebildet sein.

Zur lagerichtigen Fixierung der Solarmodule 02 ist ein Gestell 03 vorgesehen, auf das die Solarmodule 02 von oben aufgelegt sind. Zur Befestigung und/oder Sicherung der Solarmodule 02 dienen Halteplatten 04, die mit Befestigungsschrauben 05 am Gestell 03 montiert werden.

Der Schraubenkopf 06 der Befestigungsschraube 05 weist eine rotationssymmetrische Einkerbung 07 auf. Durch diese Einkerbung 07 wird ein geschwächter Materialquerschnitt 08 gebildet (strichliniert angedeutet) der eine Sollbruchstelle 09 definiert.

Durch die Einkerbung 07 wird der Schraubenkopf 06 in einen ersten Teil 10, der zum Werkzeugeingriff dient und einen zweiten Teil 11, der zum Befestigungsteil der Befestigungsschraube 05 gehört, aufgeteilt. Am ersten Teil 10 der Befestigungsschraube 05 ist eine Werkzeugeingriffsfläche 12 vorgesehen, in die ein Sechskantwerkzeug kraftübertragend eingesteckt werden kann. Bei der Montage der Befestigungsschraube 05 wird diese zunächst mit einem Werkzeug, das in die Werkzeugeingriffsfläche 12 lastübertragend eingesteckt ist, angezogen. Anschließend wird das mit dem Werkzeug übertragene Drehmoment bis zur Überschreitung einer Lastgrenze so weit erhöht, bis der erste Teil 10 des Schraubenkopfs 06 durch Aufbrechen der Sollbruchstelle 09 abgetrennt wird.

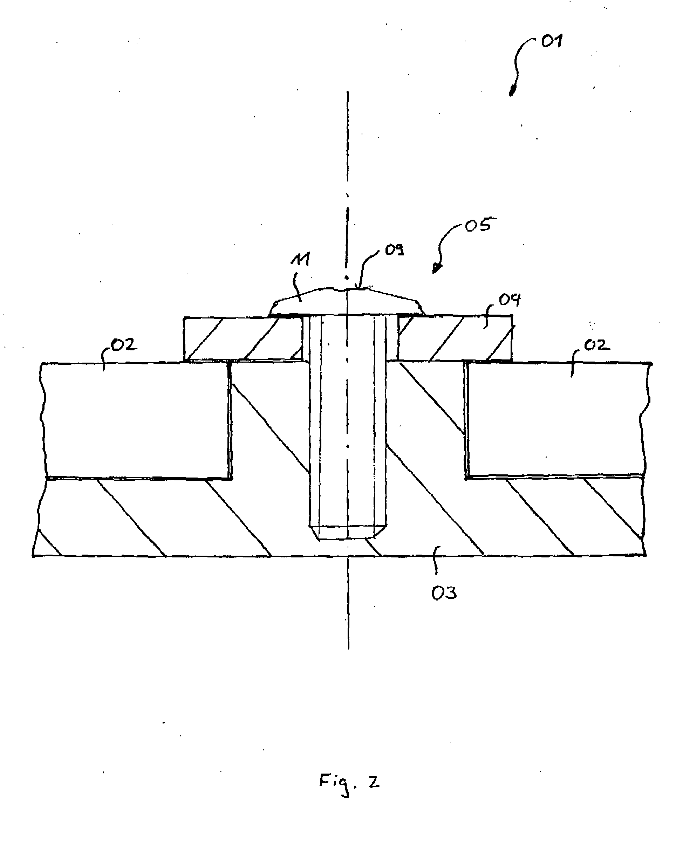

In **Fig. 2** ist der Befestigungsteil der Befestigungsschraube 05 nach Abreißen des ersten Teils 10 des Schraubenkopfes 06, der den Werkzeugeingriffsteil der Befestigungsschraube 05 bildet, dargestellt. Man erkennt, dass der zum Befestigungsteil der Befestigungsschraube 05 gehörige zweite Teil 11 des Schraubenkopfes 06 einen sich nach außen verjüngenden Materialquerschnitt aufweist, der der Form eines Nietkopfs angenähert ist, so dass ein Werkzeugeingriff mit irregulären Demontagewerkzeugen, insbesondere mit einer Zange, im Prinzip nicht mehr möglich ist.

## Patentansprüche

1. Solaranlage (01) mit zumindest einem Solarmodul (02), mit dem Sonnenenergie aufgefangen werden kann, wobei zumindest zwei Teile (02, 03, 04) der Solaranlage (01) mit einem Befestigungsmittel (05) aneinander befestigt und/oder gesichert sind, und wobei das Befestigungsmittel (05) einen Befestigungsteil aufweist, der die beiden Teile der Solaranlage miteinander verbindet, und wobei das Befestigungsmittel (05) einen Werkzeugeingriffsteil aufweist, an dem ein Montagewerkzeug kraftübertragend zum Eingriff bringbar ist,
**dadurch gekennzeichnet,**
**dass** zwischen Befestigungsteil und Werkzeugeingriffsteil eine Sollbruchstelle (09) vorgesehen ist, wobei die Sollbruchstelle (09) bei Überschreiten einer Grenzlast aufbricht und der Werkzeugeingriffsteil vom Befestigungsteil getrennt wird.

2. Solaranlage nach Anspruch 1,
**dadurch gekennzeichnet,**
**dass** das Solarmodul (02) in der Art eines Photovoltaikmoduls ausgebildet ist.

3. Solaranlage nach Anspruch 1 oder 2,
**dadurch gekennzeichnet,**
**dass** das Befestigungsmittel in der Art einer Befestigungsschraube (05) ausgebildet ist.

4. Solaranlage nach Anspruch 3,
**dadurch gekennzeichnet,**
**dass** der Schraubenkopf (06) der Befestigungsschraube (05) eine Einkerbung (07) aufweist, wobei der durch die Einkerbung (07) gebildete, geschwächte Materialquerschnitt (08) des Schraubenkopfs (06) die Sollbruchstelle (09) bildet, und wobei in der Sollbruchstelle (09) ein zum Befestigungsteil gehöriger Teil (11) des Schraubenkopfs (06) und ein zum Werkzeugeingriffsteil gehöriger Teil (10) des Schraubenkopfs (06) miteinander verbunden sind.

5. Solaranlage nach Anspruch 4,
**dadurch gekennzeichnet,**
**dass** zur Bildung der Sollbruchstelle (09) der zum Befestigungsteil gehörige Teil (11) des Schraubenkopfs (06) und ein zum Werkzeugeingriffsteil gehöriger Teil (10) des Schraubenkopfs (06) einstückig miteinander verbunden sind.

6. Solaranlage nach Anspruch 4,
**dadurch gekennzeichnet,**
**dass** zur Bildung der Sollbruchstelle der zum Befestigungsteil gehörige Teil (11) des Schraubenkopfs (06) und ein zum Werkzeugeingriffsteil gehöriger Teil (10) des Schraubenkopfs (06) durch eine Verbindungstechnik, insbesondere durch Kleben, Schweißen oder Löten, miteinander verbunden sind.

7. Solaranlage nach einem der Ansprüche 4 bis 6,
**dadurch gekennzeichnet,**
**dass** der zum Befestigungsteil gehörige Teil (11) des Schraubenkopfs (06) einen sich nach außen verjüngenden, insbesondere spitz zulaufenden, Materialquerschnitt aufweist, insbesondere dass der zum Befestigungsteil gehörige Teil (11) des Schraubenkopfs (06) in der Form eines Nietkopfs ausgeformt ist.

8. Solaranlage nach einem der Ansprüche 4 bis 7,
**dadurch gekennzeichnet,**
**dass** an dem zum Werkzeugeingriffsteil gehörigen Teil (10) des Schraubenkopfs (06) eine Werkzeugeingriffsfläche (12) mit sechseckigem Innenquerschnitt vorgesehen ist.

9. Solaranlage nach einem der Ansprüche 1 bis 8,
**dadurch gekennzeichnet,**
**dass** mit dem Befestigungsmittel (05) ein Solarmodul (02) an einem Gestell (03) zur Lagerung von Solarmodulen (02) in einer Solaranlage (01) befestigt und/oder gesichert ist.

10. Solaranlage nach einem der Ansprüche 1 bis 9,
**dadurch gekennzeichnet,**
**dass** mit dem Befestigungsmittel (05) ein Gestell zur Lagerung von Solarmodulen (02) an einem Fundament befestigt und/oder gesichert ist.

11. Befestigungsmittel (05) zur Verwendung in einer Solaranlage (01) nach einem der Ansprüche 1 bis 10,
**dadurch gekennzeichnet,**
**dass** zwischen Befestigungsteil und Werkzeugeingriffsteil des Befestigungsmittels (05) eine Sollbruchstelle (09) vorgesehen ist, wobei die Sollbruchstelle (09) bei Überschreiten einer Grenzlast aufbricht und der Werkzeugeingriffsteil vom Befestigungsteil getrennt wird.

12. Befestigungsmittel nach Anspruch 11,
**dadurch gekennzeichnet,**
**dass** das Befestigungsmittel in der Art einer Befestigungsschraube (05) ausgebildet ist.

13. Befestigungsmittel nach Anspruch 12,
**dadurch gekennzeichnet,**
**dass** der Schraubenkopf (06) der Befestigungsschraube (05) eine Einkerbung (07) aufweist, wobei der durch die Einkerbung (07) geschwächte Materialquerschnitt (08) des Schraubenkopfs (06) die Sollbruchstelle (09) bildet, und wobei in der Sollbruchstelle (09) ein zum Befestigungsteil gehöriger Teil (11) des Schraubenkopfs (06) und ein zum Werkzeugeingriffsteil gehöriger Teil (10) des Schraubenkopfs miteinander verbunden sind.

14. Befestigungsmittel nach Anspruch 12,
**dadurch gekennzeichnet,**
**dass** der zum Befestigungsteil gehörige Teil (11) des Schraubenkopfs (06) einen sich nach außen verjüngenden, insbesondere spitz zulaufenden, Außenumfang aufweist

15. Befestigungsmittel nach Anspruch 13 oder 14,
**dadurch gekennzeichnet,**
**dass** an dem zum Werkzeugeingriffsteil gehörigen Teil (10) des Schraubenkopfs (06) eine Werkzeugeingriffsfläche (12) mit sechseckigem Innenquerschnitt vorgesehen ist,
